# EUROPEAN PATENT SPECIFICATION

(11) **EP 4 202 628 B1**
(45) Date of publication and mention of the grant of the patent: **08.04.2026**
(21) Application number: 22214413.1
(22) Date of filing: 19.12.2022
(51) Int. Cl.: G06F 3/06, G06F 12/0862, G06F 12/0868, G06F 12/0888, H04L 67/568

(54) **SYSTEMS, METHODS, AND DEVICES FOR CONTENT DISTRIBUTION USING STORAGE DEVICE WITH NETWORK INTERFACE**
SYSTEME, VERFAHREN UND VORRICHTUNGEN ZUR INHALTSVERTEILUNG UNTER VERWENDUNG EINER SPEICHERVORRICHTUNG MIT NETZWERKSCHNITTSTELLE
SYSTÈMES, PROCÉDÉS ET DISPOSITIFS DE DISTRIBUTION DE CONTENU À L'AIDE D'UN DISPOSITIF DE STOCKAGE AVEC INTERFACE DE RÉSEAU

(30) Priority: 21.12.2021 US 202163292421 P; 02.12.2022 US 202218074360
(43) Date of publication of application: 28.06.2023
(73) Proprietor: Samsung Electronics Co., Ltd., Gyeonggi-do 16677 (KR)
(72) Inventor: KACHARE, Ramdas, San Jose, CA, 95134 (US); YANG, Jingchi, San Jose, CA, 95134 (US); HUEN, Hingkwan, San Jose, CA, 95134 (US); CARGNINI, Luis Vitorio, San Jose, CA, 95134 (US)
(74) Representative: Kuhnen & Wacker Patent- und Rechtsanwaltsbüro PartG mbB

(56) References cited:
- US-A1- 2016 127 494
- US-A1- 2019 250 845
- US-A1- 2020 201 661
- US-A1- 2021 181 995
- US-A1- 2021 247 935
- US-B1- 6 963 954
- US-B1- 9 608 936

## Description

### FIELD

The disclosure relates generally to devices, and more particularly to devices supporting content distribution.

### BACKGROUND

To distribute content (for example, to stream video data) across a network, the content may be loaded from a storage device into memory. Once in memory, the content may be transcoded (that is, encoded in a format acceptable to the recipient). Once the content is ready for transmission, the content may be moved from memory to a network interface card and sent to the recipient.

A need remains for to improve processing of content for distribution.

US 2020/201661 A1 discloses: A device includes a converged input/output controller that includes a physical target storage media controller, a physical network interface controller and a gateway between the storage media controller and the network interface controller, wherein gateway provides a direct connection for storage traffic and network traffic between the storage media controller and the network interface controller.

US 2016/127494 A1 discloses: A system that includes a processing core embedded in a controller that controls a non-volatile cache; and a direct access manager for directing the processing core, wherein the direct access manager includes: a switch configuration system that includes logic to control a switch for either a remote direct access mode or a host access mode, wherein the switch couples each of the NIC, a local bus, and the non-volatile cache; a command processing system that includes logic to process data transfer commands; and a data transfer system that includes logic to manage the flow of data directly between the non-volatile cache and the NIC.

US 9 608 936 B1 discloses a system comprising: a packet routing network; Flash storage circuitry; a management processor coupled as an endpoint to the network; an input/output (I/O) circuit coupled as an endpoint to the network; a packet processing circuit coupled as an endpoint to the network; and a RAID management circuit coupled as an endpoint to the network and configured to send and receive packets to and from the Flash storage circuitry; wherein the management processor is configured to determine routing of packets among the I/O circuit, packet processing circuit and RAID management circuit.

US 2021/247935 A1 discloses: A multiple function storage device including an enclosure, a storage device associated with the enclosure, and a bridging device associated with the enclosure. The storage device may include a connector to receive a first message using a first protocol originating at a host, a physical function (PF) and a virtual function (VF) exposed by the storage device via the connector, storage for data relating to the first message, and a controller to manage writing a write data to the storage and reading a read data from the storage. The bridging device may include an embedded network interface controller (eNIC) to receive a second message using a second protocol from the host, a write buffer to store the write data to be written to the storage device by the host, a read buffer to store the read data to be read from the storage device for the host, a bridge circuit to translate the second message using the second protocol into the first message using the first protocol, and a root port to identify the storage device and to transmit the first message to the VF. The bridging device may be configured to map the host to the VF.

US 2021/181995 A1 discloses: A Solid State Drive (SSD may include ports to receive requests from a host and to send requests to a second storage device. The SSD may include flash storage for data. An SSD controller may process the requests received from the host and generate the requests sent to the second storage device. The SSD may act as a cache for the second storage device.

US 2019/250845 A1 discloses: A method includes storing a data heat map in local cache of a non-volatile memory express (NVME) controller associated with an NVME device, configuring an asynchronous event notification command in a submission queue associated with the NVME device, generating a request for data migration notification to host based on the data heat map, and communicating the data migration notification to a host using the asynchronous event notification command.

### SUMMARY

The invention is defined by the appended claims. Embodiments of the disclosure include a device. The device includes a storage device and a network interface device (e.g. a network interface card). Data may be accessed from the storage device and delivered to the network interface device for content delivery.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a system including a device that may be used for content delivery, according to embodiments of the disclosure.
FIG. 2 shows details of the machine of FIG. 1, according to embodiments of the disclosure.
FIG. 3 shows details of the device of FIG. 1, according to embodiments of the disclosure.
FIG. 4 shows details of requests that may be sent from the processor of FIG. 1 to the device of FIG. 1 and the operations performed by the device of FIG. 1 in response, according to embodiments of the disclosure.
FIG. 5 shows details of the storage device of FIG. 3, according to embodiments of the disclosure.
FIG. 6 shows details of the buffer of FIG. 3, according to embodiments of the disclosure.
FIG. 7A shows multiple buffers that may be included in the device of FIG. 1, according to embodiments of the disclosure.
FIG. 7B shows the buffer of FIG. 3 divided into regions, according to embodiments of the disclosure.
FIG. 8 shows data being processed by the circuit of FIG. 3 to produce different encodings of the data, according to embodiments of the disclosure.
FIG. 9 shows hardware and software environments to which embodiments of the disclosure are applicable.
FIG. 10 shows the device of FIG. 1 including root ports that may be used to connect to multiple storage devices and/or network interface devices, according to embodiments of the disclosure.
FIG. 11 shows a flowchart of an example procedure for the device of FIG. 1 to process a request from the processor of FIG. 1, according to embodiments of the disclosure.
FIG. 12 shows a flowchart of another example procedure for the device of FIG. 1 to process a request from the processor FIG. 1, according to embodiments of the disclosure.
FIG. 13 shows a flowchart of an example procedure for the storage device of FIG. 3 to prefetch data into the buffer of FIG. 3, according to embodiments of the disclosure.
FIG. 14 shows a flowchart of an example procedure for the processor of FIG. 1 to issue requests to the device of FIG. 1, according to embodiments of the disclosure.
FIG. 15 shows a flowchart of another example procedure for the processor of FIG. 1 to issue requests to the device of FIG. 1, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Content distribution-for example, video-on-demand services-are becoming increasingly popular. Rather than owning physical copies, such as Digital Video Discs (DVDs) or Blu-ray discs, of their favorite content, customers may access their content on demand, leaving the storage of the content to the content providers.

When a customer requests access to a particular content, the content provider may first verify that the customer is entitled to access the content. Assuming the customer is entitled to access the content, the content provider may then locate the desired content on their storage devices. The content may be converted into a format that the customer may use, and the content may then be distributed (streamed) to the customer.

Aside from not having to have a physical copy of the content, this model has other advantages to the customer. With a DVD or Blu-ray disc, the customer may be limited to viewing the content when they have access to an appropriate player; with content distributed over a network, no such player may be needed. Content may be accessed regardless of physical location, as long as an appropriate network connection is available.

In addition, the customer may be able to view the content on any number of devices, rather than being limited to the particular devices that may be connected to an appropriate player, and content may be passed from one device to another. For example, the customer might start viewing the content on a high definition television, transfer the content to a smartphone, and conclude viewing the content on a standard definition television. The content provider may appropriately encode the content based on the device being used at a particular time, or bandwidth limitations imposed by a network service provider, or based on network traffic conditions.

But to distribute such content, the content provider may load the content from a storage device into a memory connected to a processor. The processor may then perform transcoding of the data in the memory into an encoding appropriate for the customer's device. After transcoding is complete, the content may then be transferred to a network interface card to transmit the content across the network to the customer.

This model for content distribution includes some inherent limitations. First, even if the data is not transcoded (but can be transmitted in the form stored on the storage device), the data is moved first from storage device into memory, and then to the network interface card. There may be latencies associated with moving the data twice (once from storage device to memory, and once from memory to network interface card), which may increase the amount of time needed to transmit the data to the customer. In addition, by having the processor perform the transcoding, the number of cycles available to the processor for other operations may be reduced, which may slow down or delay other operations.

Embodiments of the disclosure may address these limitations by combining a storage device and a network interface card into a single device. The device may expose functions to the processor to access both the storage side and the network interface side of the device, enabling the processor to orchestrate device operations. The device may also include a buffer that may be used to store data being transferred from the storage side to the network interface side. In this manner, the data may be moved directly from the storage side to the network interface side without having to pass through the memory of the host system, expediting distribution of the content. The device may perform content transmission without the direct involvement of the processor.

Embodiments of the disclosure may also include a circuit (such as a Field Programmable Gate Array (FPGA), an Application-Specific Integrated Circuit (ASIC), a System-on-a-Chip (SoC), or a processor) that may perform transcoding of data while resident in the buffer. In this manner, the processor may avoid spending time performing the transcoding when other operations may be waiting.

Embodiments of the disclosure may include more than one storage functions and/or more than one network interface functions, thereby expanding the overall storage from which content may be accessed and/or how much data may be distributed by the device. Embodiments of the disclosure may also include one or more root ports or other mechanisms to connect multiple devices that may be used to establish connections to storage devices and/or network interface cards.

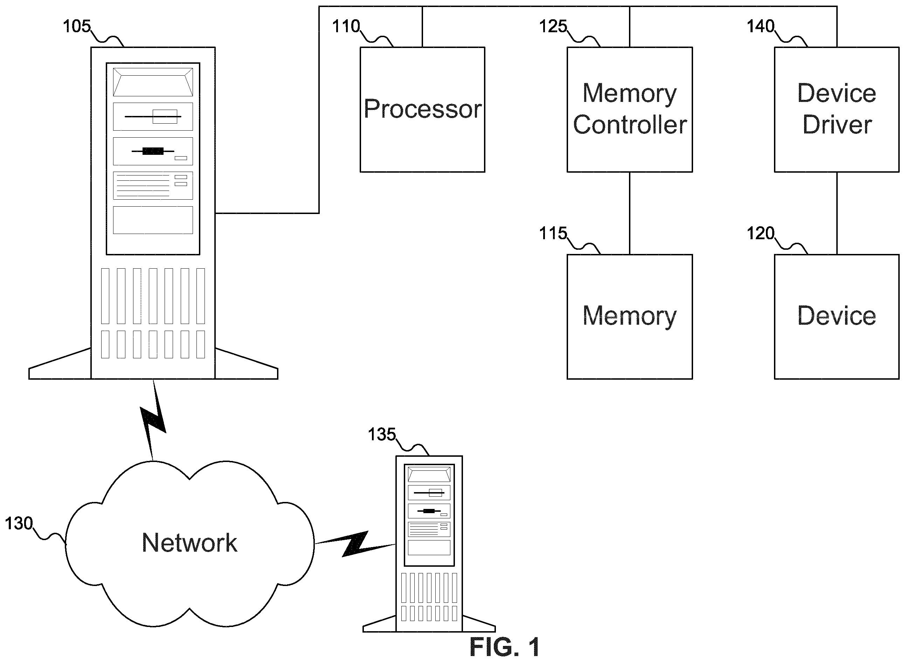

FIG. 1 shows a system including a device that may be used for content delivery, according to embodiments of the disclosure. In FIG. 1, machine 105, which may also be termed a host or a system, may include processor 110, memory 115, and device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

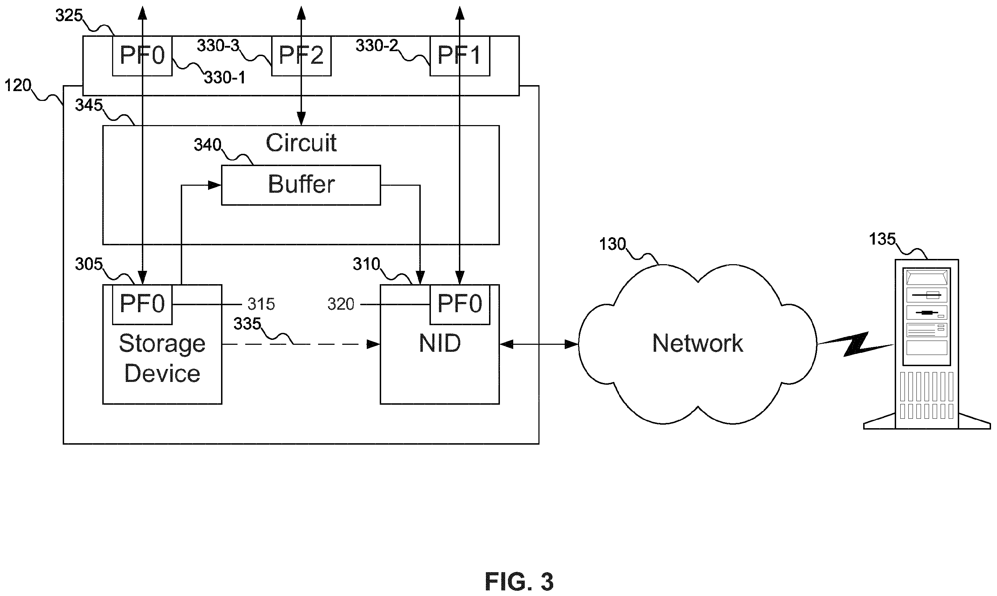

Processor 110 and memory 115 may also support an operating system under which various applications may be running. These applications may issue requests (which may also be termed commands) to read data from or write data to memory 115, or to device 120. As discussed further with reference to FIG. 3 below, device 120 may include both a storage device and a network interface device. The storage device may be used to support applications reading or writing data via some sort of file system, and the network interface device may be used to send or receive data across network 130, perhaps to or from client device 135 (among other possibilities). Device 120 may be accessed using device driver 140. While FIG. 1 shows one device 120, there may be any number of devices 120 in machine 105. A storage device may support any desired protocol or protocols, including, for example, the Non-Volatile Memory Express (NVMe) protocol. Different storage devices may support different protocols and/or interfaces. For example, a storage device might support a cache coherent interconnect protocol, which may support both block-level protocol (or any other higher level of granularity) access and byte-level protocol (or any other lower level of granularity) access to data on the storage device. An example of such a cache coherent interconnect protocol is the Compute Express Link (CXL) protocol, which supports accessing data in blocks using the CXL.io protocol and accessing data in bytes using the CXL.mem protocol. In this manner, data on a CXL storage device may be accessed as either block-level data (like an SSD) or byte-level data (such as a memory): the CXL storage device may be used to extend the system memory.

While the above description uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure. Further, different types of storage devices may be mixed. For example, one storage device might be a hard disk drive, and another storage device might be an SSD.

Network 130 may be any desired type of network. For example, network 130 may be a local area network (LAN), a wide area network (WAN), a metropolitan area network (MAN), or a world-wide network, such as the Internet. Network 130 may also include any desired combination of these networks. For example, the connection between machine 105 and client device 135 might include a LAN (to which machine 105 is connected), another LAN (to which client device 135 is connected), and a larger network such as a MAN or the Internet connecting the two LANs. Network 130 may include wired connections, wireless, connections, or both. In addition, network 130 may support the use of virtual private networks, to secure at least part of the connections between machine 105 and client device 135.

Although FIG. 1 depicts machine 105 as a server (which could be either a standalone or a rack server), embodiments of the inventive concept may include machine 105 of any desired type without limitation. For example, machine 105 could be replaced with a desktop or a laptop computer or any other machine that may benefit from embodiments of the inventive concept. Machine 105 may also include specialized portable computing machines, tablet computers, smartphones, and other computing machines. Similarly, while FIG. 1 depicts client device 135 as a tower computer, client device 135 may be a desktop or laptop computer, a portable computing device, a tablet computer, a smartphone, or any other desired device.

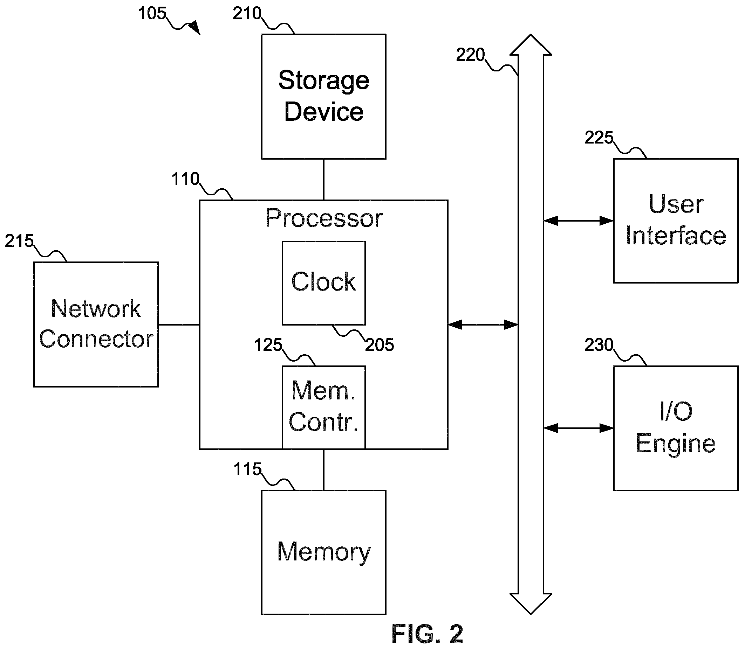

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 210, and to network connector 215, which may be, for example, an Ethernet connector or a wireless connector. Processors 110 may also be connected to buses 220, to which may be attached user interfaces 225 and Input/Output (I/O) interface ports that may be managed using I/O engines 230, among other components.

FIG. 3 shows details of device 120 of FIG. 1, according to embodiments of the disclosure. In FIG. 3, device 120 may include storage device 305 and network interface device 310 (which may also be termed a network interface card). Storage device 305 may function like any storage device, processing requests to read data, write data, and/or delete data. Storage device 305 may be any desired form of storage device, and may operate according to any desired protocols. For example, storage device 305 might be an SSD or a hard disk drive, and storage device 305 might process file system requests or key-value requests.

Network interface device 310 may function like any network interface device, and may include a connection to network 130, as shown. Network interface device 310 may be used to send or receive data at machine 105 of FIG. 1 across network 130.

Storage device 305 and network interface device 310 may include functions that may be used to issue requests to the devices. For example, storage device 305 may include physical function (PF) 315, and network interface device 310 may include PF 320. A request received at PF 315 may then be processed by storage device 305, and a request received at PF 320 may then be processed by network interface device 310.

Because storage device 305 and network interface device 310 may be part of device 120, functions 315 and 320 might not be directly visible to processor 110 of FIG. 1. Thus, device 120 may enumerate the various functions exposed by storage device 305 and/or network interface device 310. Device 120 may also include host interface 325, which may expose functions 330-1 and 330-2 (which may be referred to collectively as functions 330) to processor 110 of FIG. 1, which may correspond to functions 315 and/or 320 exposed by storage device 120 and/or network interface device 310. In this manner, processor 110 of FIG. 1 may issue requests to functions 330-1 and 330-2, which may then be delivered to storage device 305 and/or network interface device 310. In some embodiments of the disclosure, host interface 325 may include an endpoint that may be enumerated by processor 110 of FIG. 1 to determine what devices are available, and what functions are exposed by those devices.

In some embodiments of the disclosure, storage device 305 and/or network interface device 310 may expose more than one PF. In such embodiments of the disclosure, host interface 325 may expose equivalent numbers of functions, enabling processor 110 of FIG. 1 to use all of the available functions offered by storage device 305 and/or network interface device 310.

In some embodiments of the disclosure, storage device 305 and/or network interface device 310 may also expose one or more virtual functions (VFs). A VF may be distinguished from a PF in that a VF may share hardware with a PF (whereas two PFs may each use separate hardware). In such embodiments of the disclosure, host interface 325 may expose functions that may correspond to both PFs and VFs. In some embodiments of the disclosure, host interface 325 may expose a PF corresponding to each PF of storage device 305 and/or network interface device 310, and may expose a VF corresponding to each VF of storage device 305 and/or network interface device 310. In other embodiments of the disclosure, host interface 325 may only expose PFs, with each exposed PF corresponding to either a PF or a VF of either storage device 305 and/or network interface device 310.

In systems without device 120 (and with separate storage devices 305 and network interface devices 310), processor 110 of FIG. 1 may read data from storage device 305 into memory 115 of FIG. 1. Processor 110 of FIG. 1 may then send the data from memory 115 of FIG. 1 to network interface device 310 for transmission across network 130. By including device 120, embodiments of the disclosure may avoid the need to move data from storage device 305 to memory 115 of FIG. 1 and then to network interface device 310: data may be moved directly from storage device 305 to network interface device 310 without involving memory 115 of FIG. 1. Embodiments of the disclosure may reduce the latency involved in transmitting the data by avoiding the transfer of data to and from memory 115 of FIG. 1.

In some embodiments of the disclosure, network interface device 310 may read the data directly from storage device 305, as shown by dashed line 335. If network interface device 310 reads the data directly from storage device 305, there may be only one operation to transfer the data (from storage device 305 to network interface device 310), which means that data may be transmitted as efficiently as possible.

But for content delivery systems, having network interface device 310 read the data directly from storage device 305 might not be the most efficient approach. For one thing, storage device 305 might be storing data that might be used in different ways at the same time. For example, storage device 305 might be asked to store new data, or to read data so that an application (perhaps running on processor 110 of FIG. 1) might process the data. Depending on the number of requests queued up, network interface device 310 might have to wait before its requests to read data from storage device 305 are satisfied.

As an alternative to network interface device 310 reading data directly from storage device 305, storage device 305 may copy data to be transmitted using network interface device 310 first to buffer 340. Buffer 340 may then store the data as long as needed until network interface device is ready to send the data. Put another way, storage device 305 may prefetch data that is expected to be sent by network interface device 310 and store that data in buffer 340, so that network interface device 310 may read the data from buffer 340 when network interface device 310 is ready to transmit more data across network 130.

Buffer 340 may be implemented as any desired form of memory. In some embodiments of the disclosure, buffer 340 may be implemented as volatile storage, such as DRAM or SRAM. In other embodiments of the disclosure, buffer 340 may also be implemented as non-volatile storage, such as flash storage. In general, buffer 340 may be implemented using storage that has a low latency, to minimize the time needed to move data into and out of buffer 340.

For buffer 340 to be used to stage data between storage device 305 and network interface device 310, buffer 340 may be implemented as a portion of memory in device 120 (other implementations are also possible, such as linked list structures, may also be used). Buffer 340 may have two pointers associated with it: a head pointer (pointing to the next data to be read from buffer 340) and a tail pointer (pointing to the next address in buffer 340 where data may be written). Buffer 340 may be implemented like an array, with addresses looping back around. For example, if buffer 340 includes a range of addresses starting at 0x1000 and ending at 0x2000, after data is written at address 0x2000, the next data may be written to address 0x1000 (as though address 0x1000 followed address 0x2000). If the head pointer and the tail pointer are equal, it may be concluded that buffer 340 is empty; if the tail pointer points to the address after the head pointer, it may be concluded that buffer 340 is full. Storage device 305 and network interface device 310 may each be able to access the head pointer and tail pointer to check for these conditions (although normally storage device 305 might only update the tail pointer as data is written to buffer 340 and network interface device 310 might only update the head pointer after data is read from buffer 340).

In some embodiments of the disclosure, processor 110 of FIG. 1 may be able to access data in buffer 340; in other embodiments of the disclosure, buffer 340 may be accessible only by storage device 305 and/or network interface device 310. But processor 110 of FIG. 1 may be involved in managing buffer 340. For example, buffer 340 might use a portion of a memory of device 120, but might not necessarily use all of the memory of device 120. Processor 110 of FIG. 1 might define the address range used by buffer 340. For example, processor 110 of FIG. 1 might set a base address register that applies to buffer 340, even if processor 110 of FIG. 1 does not access buffer 340.

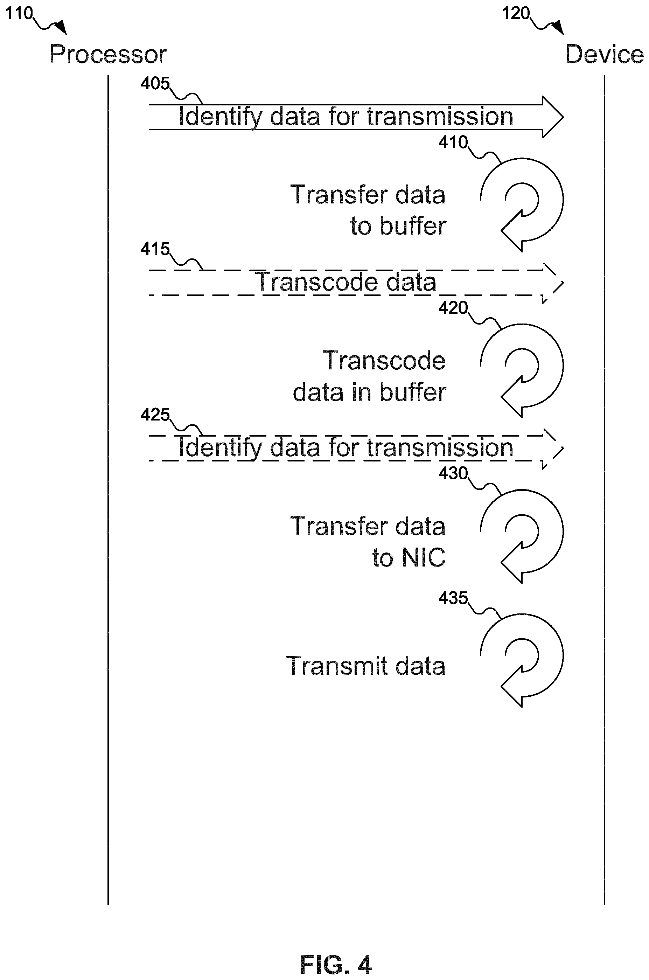

The reason processor 110 of FIG. 1 might be involved in setting the address range for buffer 340, even if processor 110 of FIG. 1 does not access the data from buffer 340, is that processor 110 of FIG. 1 may orchestrate the movement of data within device 120. For example, as described with reference to FIG. 4 below, processor 110 of FIG. 1 may issue instructions regarding what data to retrieve from storage device 305 and send using network interface device 310. Processor 110 of FIG. 1 might specify the address in buffer 340 where data read from storage device 305 might be stored, and then provide that address to network interface device 310 so that network interface device 310 may read that data and deliver its content. Processor 110 of FIG. 1 may also use the address in buffer 340 to specify what data should be processed and how it should be processed, as discussed below.

As just mentioned, data in buffer 340 may be processed by device 120 before the data is delivered using network interface device 310. For example, assume that the data being transmitted is video data (such as a video clip or a movie from a content provider). The video data might be stored using one encoding: for example, in 4K high definition video. But if the video data is being viewed on client device 135 that cannot support 4K high definition video, or client device 135 does not support the particular encoding of the video data, or the network connection between device 120 and client device 135 lacks the bandwidth to support 4K high definition video (for example, if the network service provider caps bandwidth for client device 135), it may be useful (or necessary) to transcode the data into another format before transmission.

Circuit 345 may perform such transcoding of the data while the data is in buffer 340. Circuit 345 may take the data in buffer 340 and transform the data into a format that client device 135 may be able to process or otherwise use. Circuit 345 may be implemented in any desired manner: for example, using a Field Programmable Gate Array (FPGA), an Application-Specific Integrated Circuit (ASIC), a Graphics Processing Unit (GPU), a General Purpose GPU (GPGPU), a System-on-a-Chip (SoC), a Tensor Processing Unit (TPU), a Neural Processing Unit (NPU), or a central processing unit (CPU) or other suitably programmed general purpose processor, among other possibilities.

Note that, depending in the overall size of the data to be transmitted to client device 135, the entirety of the data to be delivered may be larger than buffer 340. For example, buffer 340 might be large enough to store 500 megabytes (MB) of data, but the data to be transmitted is several gigabytes (GB) in size. This situation may arise, for example, if the data to be delivered is a feature-length movie. In such situations, buffer 340 might only store part of the data at any one time. Circuit 345 may process the portion of the data in buffer 340; then as buffer 340 is emptied (by network interface device 310) and filled (by storage device 305), circuit 345 may process the new data when it occupies buffer 340.

In embodiments of the disclosure that include circuit 345, host interface 325 may also expose function 330-3, which may be used to send requests to circuit 345. For example, processor 110 of FIG. 1 may issue a request to function 330-3 specifying the desired format for transcoding the data in buffer 340.

Note that while transcoding (or other processing) of data in buffer 340 might be avoided if storage device 305 stores multiple versions of the data, in which case the version requested by client device 135 may already be present on storage device 305. Thus, there may be a tradeoff: processing may reduce the amount of data stored on storage device 305 (storing fewer versions of the data may reduce the amount of storage required for the data), but may take time that may be saved if the desired version is already stored and ready for delivery.

While the discussion above focuses on using circuit 345 to transcode the data in buffer 340, embodiments of the disclosure may use circuit 345 to process the data in buffer 340 in any desired manner. For example, circuit 345 might be used to implement a function that transforms data in a table stored in buffer 340. Or, circuit 345 might be used to package the data in buffer 340 for transmission to client device 135 that expects data packets to be in a special format. More generally, circuit 345 may also be referred to as an accelerator.

In some embodiments of the disclosure, circuit 345 may apply Quality of Service (QoS) criteria to the use of buffer 340. For example, circuit 345 may instruct storage device 305 to perform data read/prefetch into buffer 340 based on the transcoding characteristics and/or the needs of client device 135. In other words, the data prefetch/read policy may be a function of the QoS and end-user content delivery needs.

In some embodiments of the disclosure, buffer 340 may be allocated for transmission of the data. That is, when client device 135 of FIG. 1 requests that data be delivered from machine 105 of FIG. 1, processor 110 of FIG. 1 may inform device 120 that the content is to be delivered. Device 120 may then allocate some memory within device 120 to be used as buffer 340 for the delivery of that data. **In** such embodiments of the disclosure, the memory in device 120 may support using more than one buffer 340, based on how memory is allocated.

**In** some situations, a failure of network 130 might result in data not being delivered to client device 135. **In** some embodiments of the disclosure, if there is a failure of network 130, the data may remain in buffer 340 until transmission completes, enabling network interface device 310 to retransmission or replay of the data from buffer 340 until the data is successfully transmitted (at which point the data may be removed from buffer 340). **In** other embodiments of the disclosure, if there is a failure of network 130, the data may be stored on storage device 305 to support resending the data. This may free up buffer 340 for new data to be processed by circuit 345. Note that even if the data is successfully sent across network 130, the data (as processed by circuit 345) might still be copied from buffer 340 back to storage device 305, so that the processed data may be sent in response to later requests without being processed anew.

**In** other embodiments of the disclosure, buffer 340 may be determined in advance. Then, as data is transferred into buffer 340, portions of buffer 340 may be allocated to store the data, and when the data has been delivered (and no longer needs to be stored in buffer 340), the portions of buffer 340 may be deallocated. Note that in such embodiments of the disclosure, the components that allocate memory (which may be circuit 345 or storage device 305) may be different from the component that deallocates memory (which may be network interface device 310).

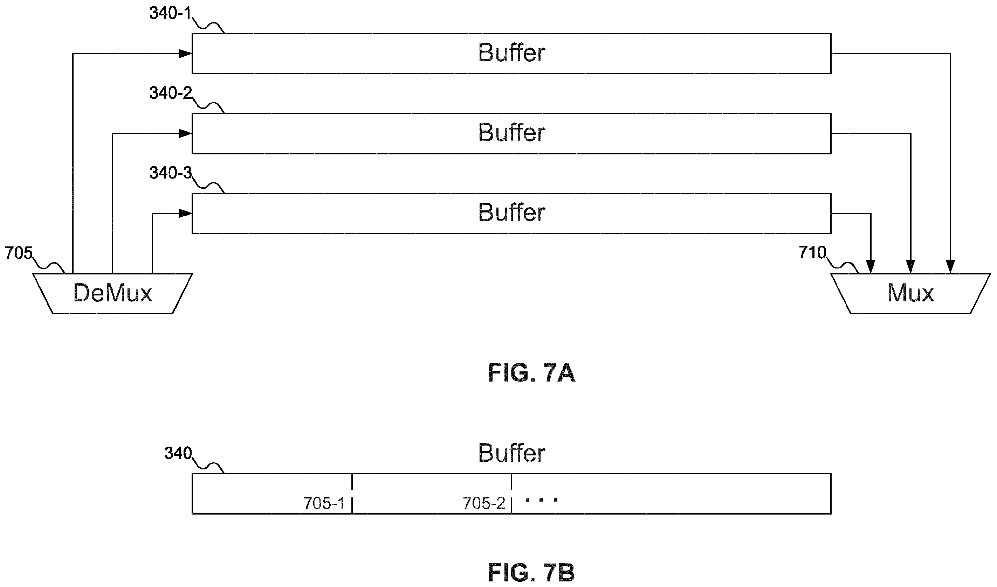

While FIG. 3 shows device 120 of FIG. 1 as including one circuit 345 (with one buffer 340), embodiments of the disclosure may include multiple circuits 345, each of which may function independently of the others (although circuits 345 may also work together: for example, to deliver large amounts of data that require processing before delivery to a single client device 135). The possibility of multiple buffers 340 (or subdivision of buffers 340) is discussed further with reference to FIGs. 7A-7B below.

**In** some embodiments of the disclosure, processor 110 of FIG. 1 may inform device 120 of the total content size to be delivered to client device 135. Device 120 may then orchestrate the transfer of data into buffer 340. In such embodiments of the disclosure, device 120 may offload data management orchestration from processor 110 of FIG. 1. Such orchestration offload may be performed, for example, using a unique or vendor-defined command, such as an NVMe command.

FIG. 3 shows requests sent to PFs 330-1 and/or 330-2 being delivered to storage device 305 and/or network interface device 310 (via functions 315 and/or 320). In some embodiments of the disclosure, this delivery may occur automatically: any request sent to a function 330 exposed by host interface 325 may be delivered to the corresponding subcomponent of device 120. In other embodiments, all requests received at host interface 325, regardless of which function 330 receives the request, may be delivered to circuit 345, which may then route the request to storage device 305 and/or network interface device 310 as appropriate (and circuit 345 may process any requests intended for circuit 345 without any further routing).

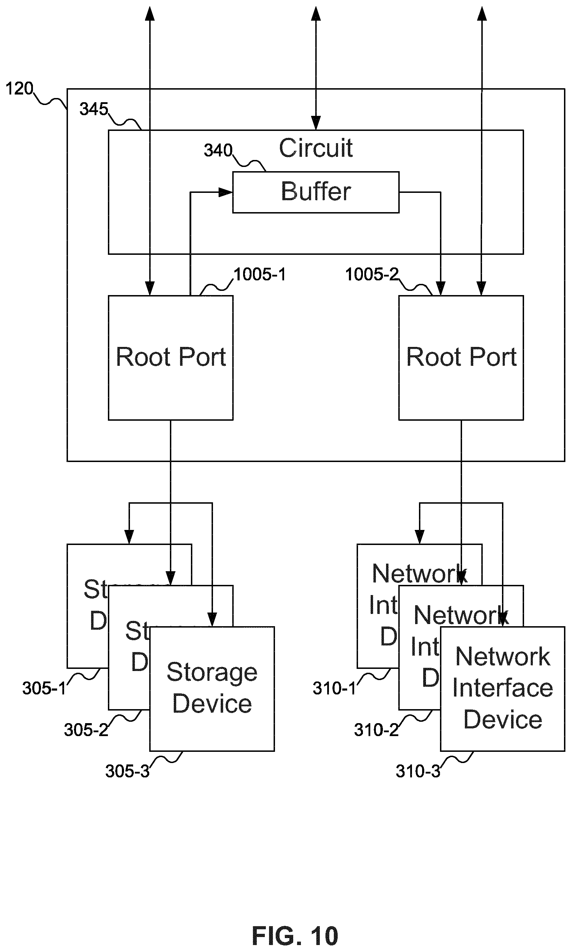

While FIG. 3 shows device 120 including one storage device 305 and one network interface device 310, embodiments of the disclosure may include more than one storage device 305 and/or more than one network interface device 310. In addition, while FIG. 3 shows storage device 305 and network interface device 310 as part of device 120 (that is, device 120 may be implemented as a larger device that physically incorporates storage device 305 and network interface device 310), embodiments of the disclosure may include device 120 communicating with storage devices 305 and/or network interface devices 310 that are not physically part of device 120. In other words, device 120 may communicate with storage devices 305 and/or network interface devices 310 across a bus that is external to device 120. How device 120 might function with more than one storage device 305 and/or more than one network interface device 310, or with external storage devices 305 and/or external network interface devices 310, is discussed further with reference to FIG. 10 below.

In the above discussion, storage device 305 and network interface device 310 are suggested as being discrete devices within device 120. FIG. 10 below also suggests this concept. But in some embodiments of the disclosure, storage device 305 and/or network interface device 310 might not be discrete elements within device 120. That is, device 120 may offer storage functions and network interface functions, but without including discrete elements that might be identified as a storage device or a network interface device. Any reference to "device" (in "storage device" and/or "network interface device") should be understood to include both discrete elements offering the described functions and appropriate functionality as offered by device 120 without including discrete elements.

FIG. 4 shows details of requests that may be sent from processor 110 of FIG. 1 to device 120 of FIG. 1 and the operations performed by device 120 of FIG. 1 in response, according to embodiments of the disclosure. In FIG. 4, processor 110 may send request 405. Request 405 may identify the data stored on storage device 305 of FIG. 3 that is intended to be delivered as content to client device 135 of FIG. 1. The data may be identified using any desired approach. For example, request 405 might include a logical address for the data as stored on storage device 305 of FIG. 3. Or request 405 might include a file name associated with the data using a file system supported by storage device 305 of FIG. 3. In response to request 405, storage device 305 of FIG. 3 may transfer the data (or at least part of the data, depending on its size relative to buffer 340 of FIG. 3) to buffer 340 of FIG. 3, shown as operation 410.

Processor 110 may then send request 415. Request 415 may specify how the data is to be transcoded by circuit 345 of FIG. 3. For example, request 415 might specify a particular bandwidth or a particular resolution for the data to be transmitted by network interface device 310 of FIG. 3, and circuit 345 of FIG. 3 may ensure that the data meets those criteria. In response to request 415, circuit 345 of FIG. 3 may transcode the data in buffer 340 of FIG. 3, shown as operation 420.

Processor 110 may then send request 425. Request 425 may instruct network interface device 310 of FIG. 3 to transmit the data to the appropriate destination. In response to request 425, network interface device 310 of FIG. 3 may read the data from buffer 340 of FIG. 3, shown as operation 430, and appropriately package and transmit the data across network 130 of FIG. 1, shown as operation 435.

Note that requests 415 and 425 are shown with dashed lines. In some embodiments of the disclosure, either or both of requests 415 and 425 may be omitted. For example, request 405 might include all of the information that might otherwise be contained in requests 415 and/or 425, in which case processor 110 may not need to send requests 415 or 425 separately. Or, if the data to be transmitted is already in an appropriate format and transcoding is not needed, then request 415 may be omitted (and operation 420 might not be performed). Embodiments of the disclosure may include any and all such variations on what requests 405, 415, and/or 425 might be sent, and which operations 410, 420, 430, and/or 435 might be performed.

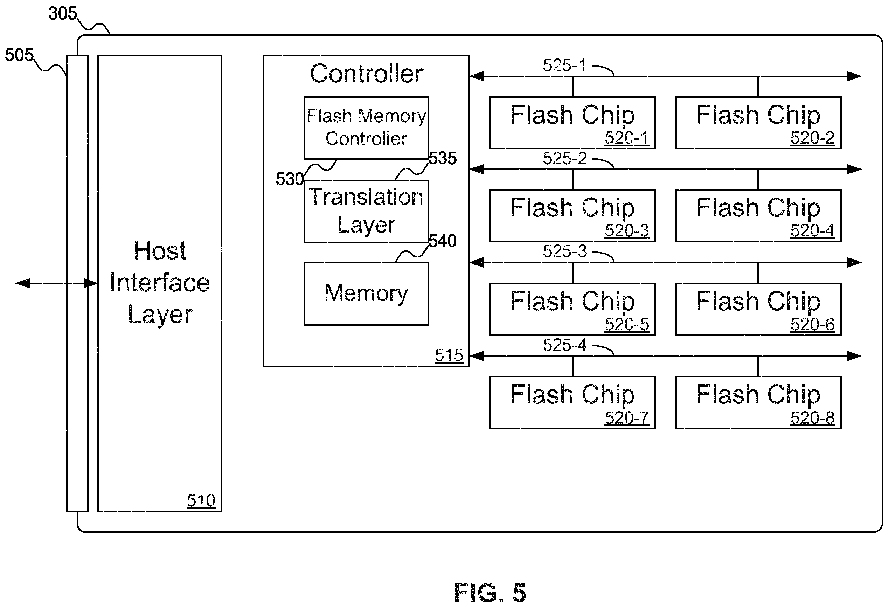

FIG. 5 shows details of storage device 305 of FIG. 3, according to embodiments of the disclosure. In FIG. 5, the implementation of storage device 305 is shown as for a Solid State Drive. In FIG. 5, storage device 305 may include connector 505, host interface layer (HIL) 510, controller 515, and various flash memory chips 520-1 through 520-8 (which may be referred to as "flash memory storage", "non-volatile storage", or just "storage", and which may be referred to collectively as flash memory chips 520), which may be organized into various channels 525-1 through 525-4 (which may be referred to collectively as channels 525).

Connector 505 may be a physical connector included with storage device 305. Connector 505 may be used to connect storage device 305 to other components in machine 105 of FIG. 1, including, for example, processor 110 of FIG. 1. Processor 110 of FIG. 1 may thus communicate with storage device 305 via connector 505. Connector 505 may be any desired variety of connector, such as a Serial AT Attachment (SATA) connector, a Serial Attached Small Computer System Interface (SCSI) (SAS) connector, a small form factor (SFF) connector, a U.2 connector, an M.2 connector, or a half height, half length (HHHL) connector, among other possibilities. Connector 505 may be used to communicate with storage device 305 via any desired bus protocols, such as a Peripheral Component Interconnect Express (PCIe) or CXL, and may support any desired storage access protocol, such as the Non-Volatile Memory Express (NVMe) or NVMe over Fabric (NVMe-oF) protocols, or any cache-coherent interconnect protocols.

Connector 505 may include one or more pins to send and receive data. These pins may be male pins in the classic sense (approximately cylindrical pieces of metal projecting outward from the main part of connector 505, ignoring any material that may be used to align connector 505 with another piece of equipment). But connector 505 may also support other forms of connection that are not male pins. For example, connector 505 may include a female receiver for a male pin that may be part of another piece of equipment connected to connector 505. Or connector 505 may include a surface other than a cylinder (or the mate to a cylinder) appropriately designed to contact another piece of equipment, thereby establish a connection between a point of contact on connector 505 and another point of contact on the other equipment. The term "pin", as used herein, is intended to encompass all such mechanisms for contact between connector 505 and any equipment designed to connect to connector 505.

Host interface layer 510 may manage communications between storage device 305 and other components (such as processor 110 of FIG. 1). That is, host interface layer 510 may send and receive data using any desired protocols across connector 505, and may translate between such protocols and formats/protocols used by controller 515. Host interface layer 510 may also manage communications (across connector 505) with devices that may be remote from storage device 305. That is, host interface layer 510 may manage communications with devices other than processor 110 of FIG. 1 (for example, an accelerator or network interface card, different from network interface device 310 of FIG. 3, among other possibilities), and which may be local to or remote from machine 105 of FIG. 1: for example, over one or more network connections. These communications may include read requests to read data from storage device 305, write requests to write data to storage device 305, and delete requests to delete data from storage device 305, among other possibilities.

Host interface layer 510 may manage an interface across only a single port, or it may manage interfaces across multiple ports. That is, host interface layer 510 may communicate with a single connector 505, or may communicate using two or more connectors 505 (should storage device 305 include and support multiple connectors 505). In addition, if storage device 305 include multiple connectors 505, storage device 305 may include a separate host interface layer 510 for each connector 505. Embodiments of the inventive concept may also mix the possibilities (for example, an SSD with three connectors 505 might have one host interface layer 510 to manage one connectors 505 and a second host interface layer 510 to manage the other two connectors 505).

Controller 515 may manage the read and write operations, along with garbage collection and other operations, on flash memory chips 520 using flash memory controller 530. (While FIG. 5 suggests that a single flash memory controller 530 might control operations along each channel 525, embodiments of the disclosure may include any number of flash memory controllers 530, each controlling operations along any number of channels 525. Thus, for example, there may be four memory controllers 530, one for each channel 525.) Controller 515 may also include translation layer 535 which may manage the mapping of logical addresses (such as logical block addresses (LBAs)) as used by machine 105 of FIG. 1 to physical addresses (such as physical block addresses (PBAs)) where the data is actually stored on storage device 305. By using translation layer 535, machine 105 of FIG. 1 does not need to be informed when data is moved from one physical address to another within storage device 305. Controller 515 may also include memory 540, which may be used for local operations within controller 515: for example, temporary storage of data when reading data, writing data, or performing garbage collection, or a local cache that may be used to expedite read or write operations. Memory 540 may be any form of memory, such as SRAM or DRAM. In some embodiments of the disclosure, memory 540 may be a form of volatile storage; in other embodiments of the disclosure, memory 540 may be a form a non-volatile storage.

In some embodiments of the disclosure, connector 505 may be part of storage device 305, as shown. But in other embodiments of the disclosure, connector 505 may actually be a part of device 120 of FIG. 1, with an internal connection of device 120 of FIG. 1 delivering information to storage device 305 from connector 505 to storage device 305.

While FIG. 5 shows storage device 305 as including eight flash memory chips 520 organized into four channels 525, embodiments of the inventive concept may support any number of flash memory chips organized into any number of channels. Similarly, while FIG. 5 shows the structure of a SSD, other storage devices (for example, hard disk drives) may be implemented using a different structure from that shown in FIG. 5 to manage reading and writing data, but with similar potential benefits.

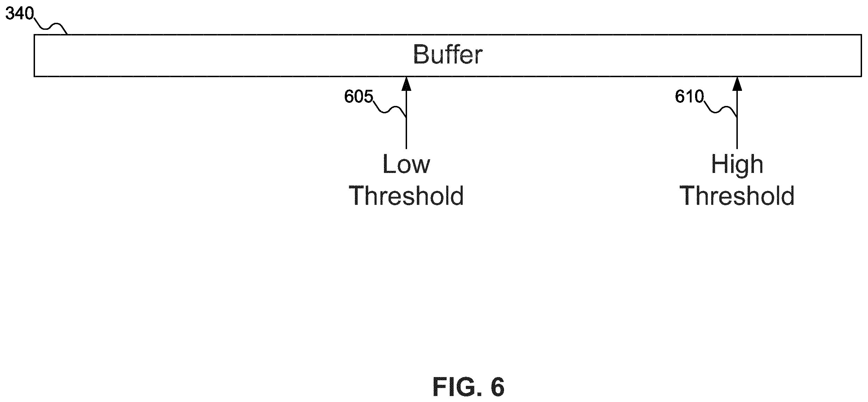

As discussed above, storage device 305 may prefetch data into buffer 340 of FIG. 3. In some embodiments of the disclosure, storage device 305 may perform such prefetch on its own, rather than being instructed when to prefetch data (either by processor 110 of FIG. 1 or circuit 345 of FIG. 3). FIG. 6 illustrates how storage device 305 may determine when to prefetch data into buffer 340 of FIG. 3.

In FIG. 6 buffer 340 includes two thresholds 605 and 610. Threshold 605 may be labeled a low threshold, and threshold 610 may be labeled a high threshold. Storage device 305 of FIG. 3 is adapted to prefetch data into buffer 340 until buffer 340 holds enough data to cross threshold 610. Once buffer 340 holds enough data to cross threshold 610, storage device 305 of FIG. 3 is adapted to pause data prefetch until buffer 340 holds enough data to cross (in the other direction) threshold 605. If buffer 340 once held enough data to cross threshold 610, then when buffer 340 is emptied sufficiently to then cross threshold 605, storage device 305 of FIG_{.} 3 is adapted to restart prefetching of data into buffer 340. In other words, high threshold 610 represents trigger to stop (or pause) data prefetch, and low threshold 605 represents a trigger to restart data prefetch, with the objective being to ensure that buffer 340 generally holds enough data for processing by circuit 345 of FIG. 3 and/or transmission using network interface device 310 of FIG. 3, but not overly full.

In embodiments of the disclosure where processor 110 of FIG. 1 or circuit 345 of FIG. 3 is orchestrating data movement, storage device 305 of FIG. 3 may notify processor 110 of FIG. 1 or circuit 345 of FIG. 3 that buffer 340 holds enough data to begin delivering content to client device 135 of FIG. 1. **In** embodiments of the disclosure where no data processing by circuit 345 of FIG. 3 is needed, storage device 305 of FIG. 3 may alternatively notify network interface device 310 of FIG. 3 that data is ready to be read from buffer 340 of FIG. 3.

While FIG. 6 suggests that thresholds 605 and 610 might be pointers into buffer 340, such an interpretation makes sense only if buffer 340 is always full from the left: that is, the oldest data in buffer 340 is always at the left end of FIG. 6, with progressively newer data toward the right. But if buffer 340 is implemented in other ways-for example, a circular queue, with head and tail pointers representing where new data may be added and old data may be removed-such an interpretation might not be directly usable. Instead, it may be better to think of thresholds 605 and 610 representing percentages of fullness for buffer 340. For example, low threshold 605 might be 50% of the capacity of buffer 340, and high threshold 610 might be 75% of the capacity of buffer 340. Alternatively, thresholds 605 and 610 might represent a portion of an address range spanned by buffer 340. For example, if buffer 340 includes an address range from 0x1000 to 0x2000 (that is, approximately 4096 addresses), then low threshold 605 might be 0x500 addresses, and high threshold 610 might be 0x750 addresses. (The range of addresses actually storing data in buffer 340 may be computed, for example, by subtracting the address of the head pointer from the address of the tail pointer, modulo the size of buffer 340: this range may then be compared with thresholds 605 and 610 to determine if either of thresholds 605 or 610 have been crossed.)

**In** the above discussion, the focus has been on a single buffer 340, being used to store data requested by a single client device 135 of FIG. 1. **In** some embodiments of the disclosure, buffer 340 may be shared to support multi-cast or broadcast distribution of the content. **In** such embodiments of the disclosure, device 120 of FIG. 1 may keep data in buffer 340 until all the content recipients have received their data.

**In** addition to multi-casting or broadcasting data, device 120 of FIG. 1 may be used to distribute multiple different data to client devices 135 of FIG. 1. For example, a single client device 135 of FIG. 1 might request data from multiple different sources (this might occur if video and audio data are stored separately but intended to be synchronized for presentation via client device 135 of FIG. 1), or multiple client devices 135 of FIG. 1 might each want various data. **In** such situations, buffer 340 may be modified, as described with reference to FIGs. 7A-7B below.

In FIG. 7A, instead of using a single buffer 340, device 120 of FIG. 1 may include multiple buffers. In FIG. 7A, three buffers 340-1 through 340-3 are shown, but embodiments of the disclosure may include any number (two or more) of buffers 340. Each buffer 340 may be used as described above, but may be used independently of each other. Thus, for example, buffer 340-1 may be used to provide content to one client device 135 of FIG. 1, buffer 340-2 may be used to provide another content to another client device 135 of FIG. 1, and buffer 340-3 may be used to provide yet another content to yet another client device 135 of FIG. 1.

In some embodiments of the disclosure, each buffer 340 may be "dedicated" to a particular storage device 305 of FIG. 3. That is, in those embodiments of the disclosure, each storage device 305 of FIG. 3 may store data in one buffer 340. But in other embodiments of the disclosure, storage device 305 of FIG. 3 (or circuit 345 of FIG. 3, depending on which element may store data in buffers 340) may be connected to multiple buffers 340 via demultiplexer 705. Using demultiplexer 705, storage device 305 of FIG. 3 may transfer data into any (or some, or all) of buffers 340. A control signal (not shown in FIG. 7A) may direct the data to the appropriate buffers 340, enabling storage device 305 of FIG. 3 to specify into which buffers 340 data should be loaded. Thus, a single storage device 305 of FIG. 3 may store data in multiple buffers 340. Still other embodiments of the disclosure may generalize this further, enabling multiple storage devices 305 of FIG. 3 to be connected to demultiplexer 705 to be able to store data in multiple buffers 340.

Note that some embodiments of the disclosure might mix these implementations, having some buffers 340 that are dedicated to particular storage devices 305 of FIG. 3 and some buffers 340 that are accessible to one or more storage devices 305 of FIG. 3.

In some embodiments of the disclosure, each buffer 340 may be "dedicated" to a particular network interface device 310 of FIG. 3. That is, in those embodiments of the disclosure, network interface device 310 of FIG. 3 may read data from one buffer 340. But in other embodiments of the disclosure, multiple buffers 340 may also be connected to network interface device 310 of FIG. 3 (or circuit 345 of FIG. 3, depending on which element may read data from buffers 340) via multiplexer 710. Using multiplexer 710, network interface device 310 of FIG. 3 may access data from a particular buffer 340. A control signal (not shown in FIG. 7A) may specify from which buffer 340 data should be read. Thus, a single network interface device 310 of FIG. 3 may read data from multiple buffers 340. Still other embodiments of the disclosure may generalize this further, enabling multiple network interface devices 310 of FIG. 3 to be connected to multiplexer 710 to be able to read data from multiple buffers 340.

Note that some embodiments of the disclosure might mix these implementations, having some buffers 340 that are dedicated to particular network interface devices 310 of FIG. 3 and some buffers 340 that are accessible to one or more network interface devices 310 of FIG. 3.

Note that some embodiments of the disclosure may omit demultiplexer 705 and/or multiplexer 710. For example, if each buffer 340 has a unique address range, then the address to which data is to be written or from which data is to be read may uniquely identify a particular buffer 340, obviating the need for demultiplexer 705 or multiplexer 710. But including demultiplexer 705 or multiplexer 710 may enable writing data to multiple buffers 340, and/or may avoid the need for each buffer 340 to have a unique address range (although buffers 340 may still need to be uniquely identified in some way).

The question may arise: why would data be written to multiple buffers 340? The answer is that in some embodiments of the disclosure, circuit 345 of FIG. 3 might perform different transcoding of the same data. By storing the same data in multiple buffers 340, circuit 345 of FIG. 3 may transcode the same data in different ways at approximately the same time.

But this explanation might lead to another question: why would circuit 345 of FIG. 3 perform different transcoding of the same data in different buffers 340? The answer to this question is that by having different transcodings of the same data available in buffers 340, network interface device 310 of FIG. 3 may select encoded data from an appropriate buffer 340 based on various criteria. These criteria may include, for example, the resolution of client device 135 of FIG. 1, a bandwidth limit applicable to client device 135 of FIG. 1, or some other network condition (such as network congestion). If the criteria may change during the delivery of the content, it may be helpful to have multiple different encodings of the data ready for delivery, so that network interface device 310 of FIG. 1 may select the encoding that is the best fit for the current criteria.

It might be considered wasteful to have circuit 345 of FIG. 3 generate multiple different encodings of the data in multiple buffers 340. But while network interface device 310 of FIG. 3 might only deliver the content from one buffer 340, the encoded content in the other buffers 340 is not necessarily wasted. For example, the encoded content in the other buffers 340 might be stored back on storage device 305 of FIG. 3, so that those encoded content may be retrieved later if needed for another client.

Each buffer 340 may use different thresholds 605 and 610 of FIG. 6. That is, different thresholds for managing data prefetching may be used with different buffers. In addition, each buffer may be processed differently by circuit 345 of FIG. 1. For example, circuit 345 may perform different transcoding on each buffer 340, or may use different QoS criteria.

While FIG. 7A suggests that each buffer 340 is identical in size, embodiments of the disclosure may have buffers 340 of different sizes.

In contrast with FIG. 7A, which shows multiple buffers 340, in FIG. 7B, buffer 340 may be divided into various regions 705-1 and 705-2 (which may be referred to collectively as regions 705). Each region 705 may be used by device 120 as though it was a separate buffer, even though device 120 of FIG. 1 may effectively have only one buffer 340. As with FIG. 7A, each region 705 may have different thresholds 605 and 610 of FIG. 6, and each region 705 may have a different size.

In addition, embodiments of the disclosure may combine these variations. For example, device 120 of FIG. 1 may include multiple buffers, some or all of which may be divided into regions 705.

In FIGs. 7A-7B, where multiple buffers 340 may be used (or simulated using regions 705), buffers 340 and/or regions 705 may be allocated space and may be processed according to any desired criteria. For example, the size of a buffer 340 and/or region 705 may depend on the needs and capabilities of client device 135 of FIG. 1: if client device 135 of FIG. 1 may only support a bandwidth of 400 kilobits per second (Kbps), buffer 340 and/or region 705 may be relatively small compared with a client that may support a bandwidth of three megabits per second (Mbps). In addition, circuits 345 of FIG. 3 may use different QoS criteria in determining the size of buffers 340 and/or regions 705. If circuit 345 of FIG. 1 includes multiple buffers 340 or multiple regions 705, circuit 345 of FIG. 3 may assign different priorities to the processing of buffers 340 and/or regions 705: for example, based on what client devices 135 of FIG. 1 have higher Service Level Agreements (SLAs).

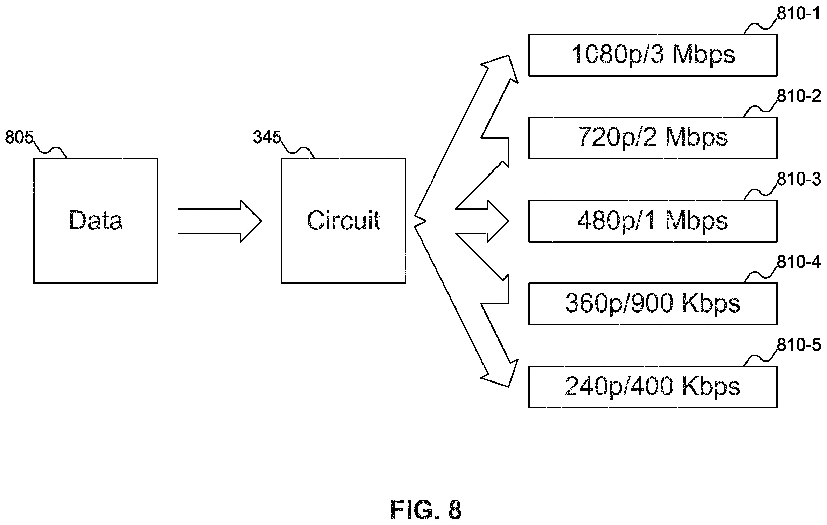

FIG. 8 shows data being processed by circuit 345 of FIG. 3 to produce different example encodings of the data, according to embodiments of the disclosure. In FIG. 8, data 805 may be stored in buffer 340 of FIG. 3. Circuit 345 may then perform transcoding of data 805 to produce encodings 810-1 through 810-5 (which may be referred to as encodings 810) of data 805 that may be appropriate for client device 135 of FIG. 1. For example, if client device 135 of FIG. 1 may support high bandwidth and high definition content (such as a laptop computer, a television, or a gaming console), circuit 345 might produce encoding 810-1, which may include 1080p video and need a 3 Mbps bandwidth connection. On the other hand, if client device 135 of FIG. 1 is a device with a limited screen resolution, or is connected via a slower network connection such as a 3G wireless network or an 802.11a/b/n router), circuit 345 might produce encoding 810-5, which may include 240p video and need a 400 Kbps bandwidth connection.

Note that circuit 345 may change the encoding for data 805 as conditions change. For example, the user might start viewing video data on a high definition television, in which case encoding 810-1 might be appropriate. Partway through the viewing, the user might switch to viewing the video data on a smartphone over a cellular network that might only support 900 Kbps data, in which circuit 345 might switch to encoding 810-4. Then later, the user might switch to viewing the data on a laptop computer over a wireless network connection, in which case circuit 345 might switch to encodings 810-2 or 810-3.

Encodings 810 may represent only a subset of possible encodings supported by circuit 345. For example, other encodings 810 may support video output at 4K or 8K resolutions (with corresponding bit rates). Encodings 810 may also include formats that are not limited to specific encodings. Thus, embodiments of the disclosure may include any desired encodings, whether or not shown as encodings 810 in FIG. 8.

While FIG. 8 suggests that encodings 810 are created by processing data 805 in real-time, as discussed with reference to FIG. 3 above, embodiments of the disclosure may store multiple versions of data 805. Thus, data 805 might be processed by circuit 345 in advance and stored on storage device 305 of FIG. 3, then later retrieved from storage device 305 of FIG. 3 and sent to network interface device 310 of FIG. 3 (possibly via buffer 340 of FIG. 3) for transmission to client device 135 of FIG. 1.

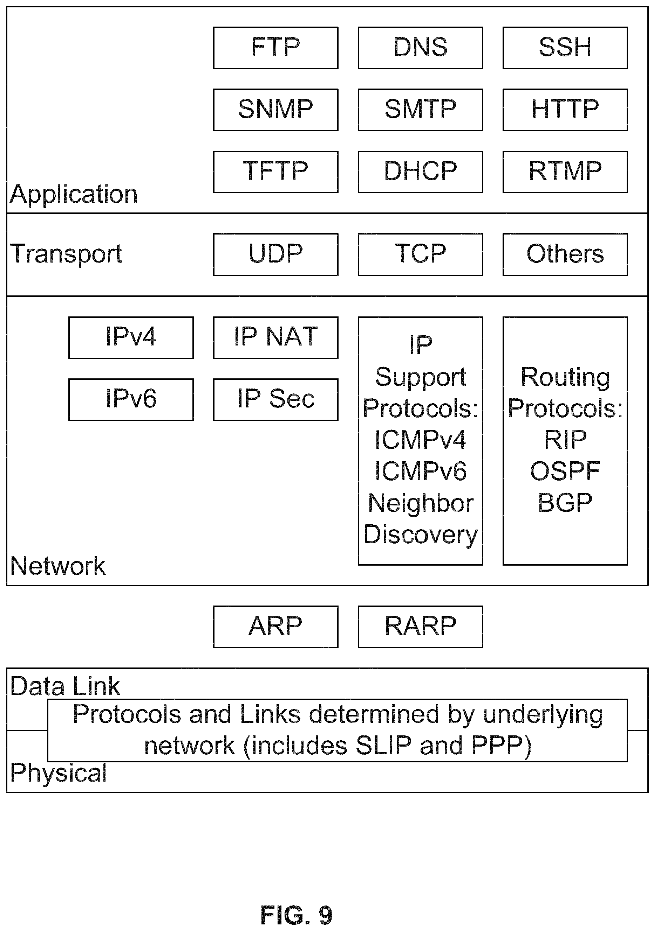

FIG. 9 shows hardware and software environments to which embodiments of the disclosure are applicable. In FIG. 9, applications might want to access data using File Transfer Protocol (FTP), Domain Name System (DNS), Secure Shell Protocol (SSH), Simple Network Management Protocol (SNMP), Simple Mail Transfer Protocol (SMTP), HyperText Transport Protocol (HTTP), Trivial File Transfer Protocol (TFTP), Dynamic Host Configuration Protocol (DHCP), or Real-Time Messaging Protocol (RTMP), among other possibilities. Data may be packaged for transport using the User Datagram Protocol (UDP), Transmission Control Protocol (TCP), or other protocols. The network itself may use Internet Protocol (IP) v4, IP v6, IP Network Address Translation (NAT), or IP Security (IP Sec), among others. These protocols may also involve related protocols, such as Internet Control Message Protocol (ICMP) v4, ICMP v6, Neighbor Discovery (ND) protocol, Routing Information Protocol (RIP), Open Shortest Path First (OSPF) protocol, or Border Gateway Protocol (BGP), among others. The Address Resolution Protocol (ARP) or Reverse ARP (RARP) may also be used. The data link and physical layers may also involve various protocols and links, such as Serial Line Internet Protocol (SLIP) or Point-to-Point Protocol (PPP), among others. Embodiments of the disclosure may be used with any or all of these various hardware and software environments.

An objective of embodiments of the disclosure is to limit any impact to the software stack and/or the network stack of machine 105. Embodiments of the disclosure may achieve this objective by taking main memory 115 of FIG. 1 out of the equation. Data may be transferred between storage device 305 of FIG. 3 and network interface device 310 of FIG. 3, without affecting how data is delivered to client device 135 of FIG. 1 or how applications may manage the software stack.

FIG. 10 shows device 120 of FIG. 1 including root ports that may be used to connect to multiple storage devices 305 of FIG. 3 and/or network interface devices 310 of FIG. 3, according to embodiments of the disclosure. As discussed above, in some embodiments of the disclosure, device 120 may include a single storage device 305 or network interface device 310 as part of the implementation of device 120. In addition, device 120 may also include multiple storage devices 305 or network interface devices 310, which may be part of the implementation of device 120.

In some embodiments of the disclosure, device 120 may include root ports (or root complexes) 1005-1 and/or 1005-2 (which may be referred to collectively as root ports 1005 or root complexes 1005). Root ports 1005 may be used to determine other devices that are connected (downstream) from device 120. For example, FIG. 10 shows three storage devices 305-1 through 305-3 that are connected to root port 1005-1, and three network interface devices 310-1 through 310-3 that are connected to root port 1005-2, but embodiments of the disclosure may include any number of storage devices 305 and/or network interface devices 310, and may include different numbers of storage devices 305 and network interface devices 310. Root ports 1005 may enumerate devices connected to root ports 1005, and may pass that information to device 120. Device 120 may then be configured to support access to multiple storage devices 305 and/or network interface devices 310.

By having root ports 1005, device 120 may support any number of attached storage devices 305 and/or network interface devices 310. That is, device 120 may support any number of storage devices 305 and/or network interface devices 310. While FIG. 10 suggests that storage devices 305 and/or network interface devices 310 are external to device 120, in some embodiments of the disclosure some or all of storage devices 305 and/or network interface devices 310 may be internal to device 120, even with root ports 1005.

In addition, in some embodiments of the disclosure, root ports 1005 may be replaced with alternative structures. For example, root ports 1005 may be replaced with other FPGAs, ASICs, GPUs, GPGPUs, SoCs, TPUs, NPUs, or CPUs. Such embodiments of the disclosure may be useful, for example, for protocol translation. For example, consider the situation where storage devices 305 use the NVMe protocol for communication, but network interface devices 310 use the PCIe protocol for communication. Root ports 1005, or alternative structures, may handle the translation from one protocol to another. This structure may enable device 120 to communicate with processor 110 of FIG. 1 using, for example, the CXL protocol, while using the PCIe protocol to communicate with storage devices 305 and/or network interface devices 310.

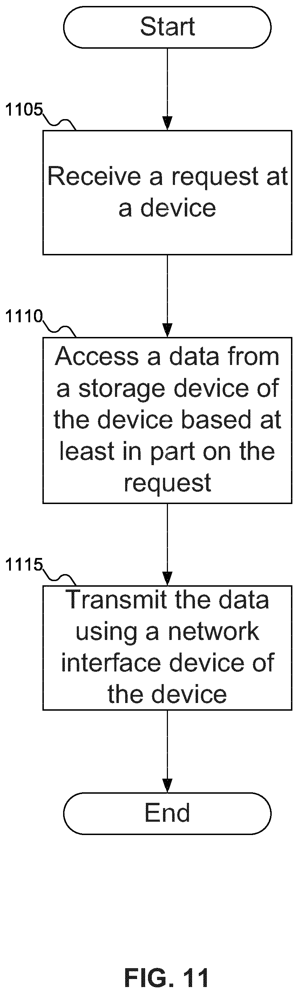

FIG. 11 shows a flowchart of an example procedure for device 120 of FIG. 1 to process a request 405, 415, and/or 425 of FIG. 4 from processor 110 of FIG. 1, according to embodiments of the disclosure. In FIG. 11, at block 1105, device 120 of FIG. 1 may receive a request, such as request 405, 415, and/or 425 of FIG. 4. At block 1110, in response to the request received at block 1110, data 805 of FIG. 8 may be accessed from storage device 305 of FIG. 3. In some embodiments of the disclosure, network interface device 310 of FIG. 3 may access data 805 of FIG. 8 directly from storage device 305 of FIG. 3; in other embodiments of the disclosure, circuit 345 of FIG. 3 or storage device 305 of FIG. 3 may push data 805 of FIG. 8 to either network interface device 310 of FIG. 3 or to buffer 340 of FIG. 3 (from which network interface device 310 of FIG. 3 may access data 805 of FIG. 8). Finally, at block 1115, network interface device 310 of FIG. 3 may transmit data 805 of FIG. 8 to a destination, such as client device 135 of FIG. 1.

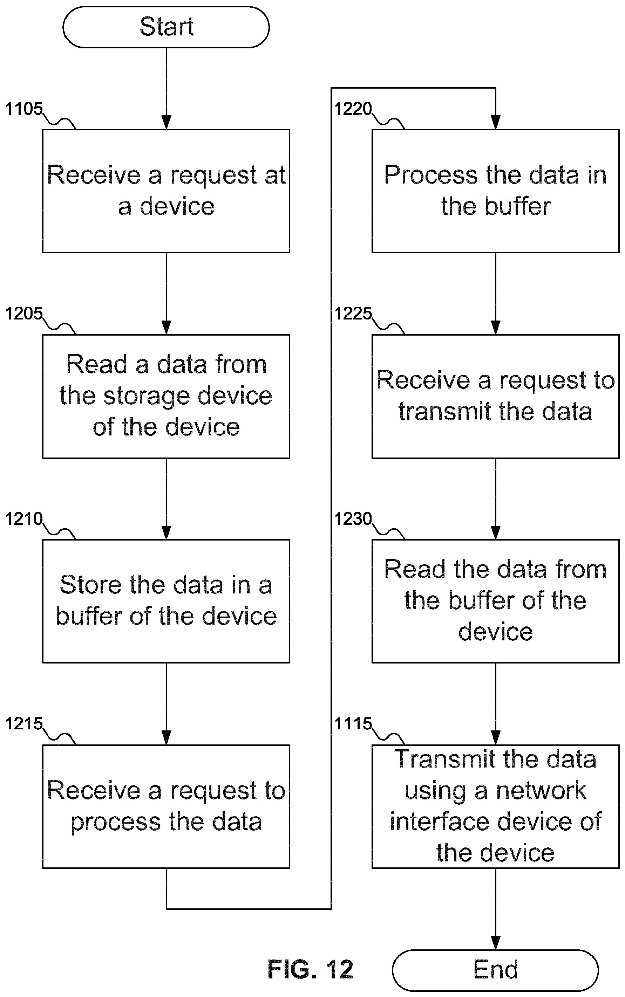

FIG. 12 shows a flowchart of another example procedure for device 120 of FIG. 1 to process a request from processor 110 FIG. 1, according to embodiments of the disclosure. FIG. 12 may be considered a more detailed, more specialized description of the operations described in FIG. 11. Where operations are the same as in FIG. 11, the same figure reference numbers may be used.

In FIG. 12, at block 1105, device 120 of FIG. 1 may receive a request, such as request 405 of FIG. 4, identifying data 805 of FIG. 8 to be transmitted to client device 135 of FIG. 1. At block 1205, circuit 345 of FIG. 3 or storage device 305 of FIG. 3 may read data 805 of FIG. 8 from storage device 305 of FIG. 3. At block 1210, circuit 345 of FIG. 3 or storage device 305 of FIG. 3, depending on which element read data 805 of FIG. 8 from storage device 305 of FIG. 3, may store data 805 of FIG. 8 in buffer 340 of FIG. 3. In embodiments of the disclosure including multiple buffers 340 of FIG. 3, the data may be stored in more than one buffer 340 of FIG. 3, as described with reference to FIG. 7A above, , possibly involving demultiplexer 705 of FIG. 7A. As discussed above with reference to FIG. 3, this storage may involve allocating memory for buffer 340 of FIG. 3, and may involve applying QoS criteria to the size or use of buffer 340 of FIG. 3.

At block 1215, device 120 of FIG. 1 may receive request 415 of FIG. 4, identifying how data 805 of FIG. 8 may be transcoded or otherwise processed. Note that in some embodiments of the disclosure, request 415 of FIG. 4 may have been included as part of request 405 of FIG. 4, in which case block 1215 may be omitted. Similarly, if data 805 of FIG. 8 does not require transcoding, request 415 of FIG. 4 may not be needed, and block 1215 may be omitted. At block 1220, circuit 345 of FIG. 3 may process data 805 of FIG. 8 in buffer 340 of FIG. 3. As discussed above with reference to FIGs. 3 and 8, this processing may involve transcoding data 805 of FIG. 8 or applying QoS criteria to the processing of data 805 of FIG. 8 in buffer 340 of FIG. 3. If data 805 of FIG. 8 does not require transcoding or other processing, then block 1220 may be omitted.

At block 1225, device 120 of FIG. 1 may receive request 425 of FIG. 4, identifying that data 805 of FIG. 8 may be delivered to client device 135 of FIG. 1. Note that in some embodiments of the disclosure, request 425 of FIG. 4 may have been included as part of requests 405 or 415 of FIG. 4, in which case block 1225 may be omitted. At block 1230, network interface device 310 of FIG. 3 may read data 805 of FIG. 8 (as transcoded or otherwise processed by circuit 345 of FIG. 3) from buffer 340 of FIG. 3. In embodiments of the disclosure including multiple buffers 340 of FIG. 3, the data may be read from a particular buffer 340, as described with reference to FIG. 7A above, possibly involving multiplexer 710 of FIG. 7A. Finally, at block 1115, network interface device 310 of FIG. 3 may transmit data 805 of FIG. 8 to a destination, such as client device 135 of FIG. 1.

Not shown in FIG. 12 is that data 805 of FIG. 8 may also be copied from buffer 340 of FIG. 3 to storage device 305 of FIG. 3. By copying data 805 of FIG. 8 from buffer 340 of FIG. 3 to storage device 305 of FIG. 3, the encoding of data 805 of FIG. 8 may retained for future use (which may avoid transcoding data 805 of FIG. 8 in response to a later request for the content).

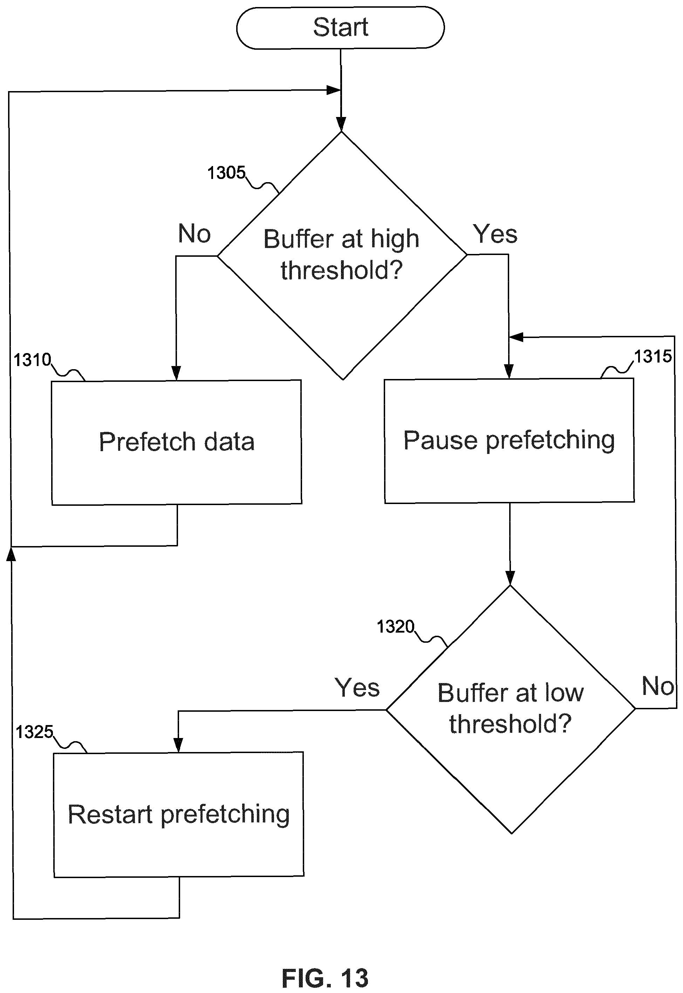

FIG. 13 shows a flowchart of an example procedure for storage device 305 of FIG. 3 to prefetch data into buffer 340 of FIG. 3, according to embodiments of the disclosure. In FIG. 13, at block 1305, storage device 305 of FIG. 3 may determine the capacity of buffer 340 of FIG. 3 has reached high threshold 610 of FIG. 6. If not, then at block 1310, storage device 305 of FIG. 3 may prefetch data into buffer 340 of FIG. 3 and processing may return to block 1305.

If the capacity of buffer 340 of FIG. 3 has reached high threshold 610 of FIG. 6, then at block 1315, storage device 305 of FIG. 3 may pause prefetching. At block 1320, storage device 305 of FIG. 3 may determine if the capacity of buffer 340 of FIG. 3 has returned to below low threshold 605 of FIG. 6 (for example, by network interface device 310 of FIG. 3 reading data 805 of FIG. 8 from buffer 340 of FIG. 3). If not, then processing may return to block 1315 (so that prefetching remained paused) until the capacity of buffer 340 of FIG. 3 has dropped below low threshold 605 of FIG. 6. Otherwise, at block 1325, storage device 305 of FIG. 3 may restart prefetching of data 805 of FIG. 8 into buffer 340 of FIG. 3, and processing may return to block 1305. (While FIG. 13 does not show an end to prefetching of data 805 of FIG. 8, prefetching may end when all data 805 of FIG. 8 has been fetched from storage device 305 of FIG. 3, regardless of the state of buffer 340 of FIG. 3.)

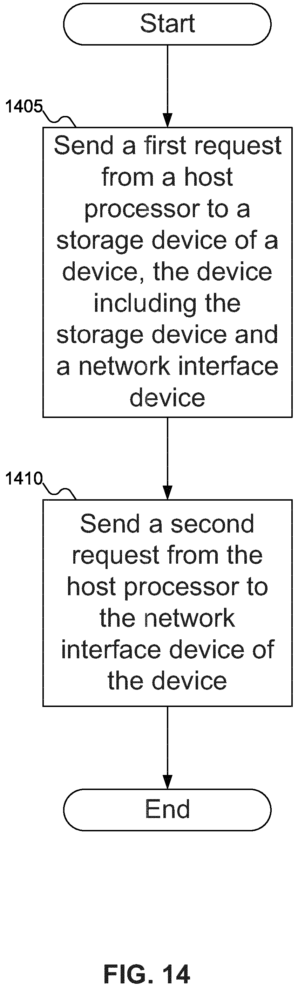

FIG. 14 shows a flowchart of an example procedure for processor 110 of FIG. 1 to issue requests 405, 415, and/or 425 to device 120 of FIG. 1, according to embodiments of the disclosure. In FIG. 14, at block 1405, processor 110 of FIG. 1 may send request 405 of FIG. 4 to device 120 of FIG. 1, indicating that data is to be delivered to client device 135 of FIG. 1. At block 1410, processor 110 of FIG. 1 may send request 425 of FIG. 4 to device 120 of FIG. 1 indicating that the data should be delivered by network interface device 310 of FIG. 3 to client device 135 of FIG. 1.

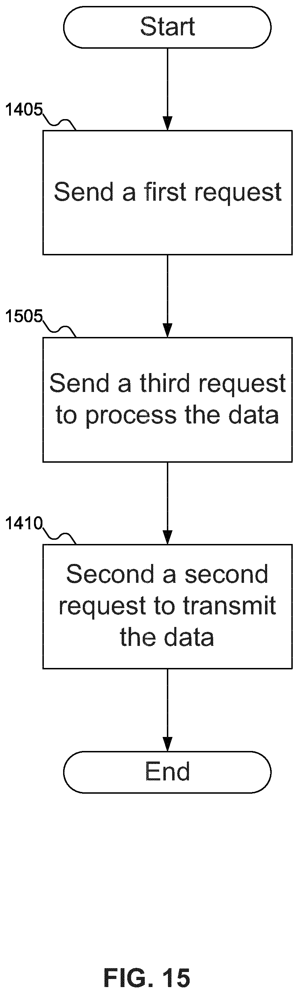

FIG. 15 shows a flowchart of another example procedure for processor 110 of FIG. 1 to issue requests 405, 415, and/or 425 of FIG. 4 to device 120 of FIG. 1, according to embodiments of the disclosure. FIG. 15 may be considered a more detailed, more specialized description of the operations described in FIG. 14. Where operations are the same as in FIG. 14, the same figure reference numbers may be used.

In FIG. 15, at block 1405, processor 110 of FIG. 1 may send request 405 of FIG. 4 to device 120 of FIG. 1, indicating that data is to be delivered to client device 135 of FIG. 1. At block 1505, processor 110 of FIG. 1 may send request 415 of FIG. 4 to device 120 of FIG. 1, indicating that circuit 345 of FIG. 3 should transcode or otherwise process data 805 of FIG. 8 in buffer 340 of FIG. 3. Finally, at block 1410, processor 110 of FIG. 1 may send request 425 of FIG. 4 to device 120 of FIG. 1 indicating that the data should be delivered by network interface device 310 of FIG. 3 to client device 135 of FIG. 1.

In FIGs. 11-15, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may have a device that includes a storage device and a network interface device. When content is to be delivered to a client device, the data may be transferred from the storage device to the network interface device. Embodiments of the disclosure offer a technical advantage in that data may be delivered to the client device without going through the main memory of the host system, thereby reducing latency.

If any processing of the data is needed-for example, transcoding of the data-the processing may be performed by a circuit of the device. By having a circuit of the device handle processing, the load on the processor of the system may be reduced, offering the technical advantage of freeing processor cycles for other operations.

In some embodiments, one or more elements may be indicated with initials, acronyms, and/or abbreviations as follows: Peripheral Component Interconnect Express (PCIe), Non-Volatile Memory Express (NVMe), physical function (PF), virtual function (VF), endpoint port (EP), root port (RP), field programmable gate array (FPGA), application-specific integrated circuit (ASIC), system on chip (SoC), network interface card (NIC), peer-to-peer (P2P), solid state drive (SSD), base address register (BAR), dynamic random access memory (DRAM, static random access memory (SRAM), and/or others as indicated below.

An embodiment of the disclosure may include a storage device having an integrated network interface in accordance with example embodiments of the disclosure. In some embodiments of the disclosure, a NIC may be connected to a storage device, for example by plugging using a connector. In some embodiments of the disclosure, a NIC may be connected without a connector, for example, in a direct and/or permanent manner. In some embodiments, the methods and apparatus described herein may provide efficient content distribution using an integrated storage device and NIC.

In some embodiments of the disclosure, one or more PCIe PFs or VFs in the FPGA EP may be presented as one or more NVMe controllers to a host.

In some embodiments of the disclosure, one or more PCIe PFs or VFs in the FPGA EP may be presented as one or more NICs to the host.

In some embodiments of the disclosure, an FPGA may be alternatively implemented as an ASIC, SoC, and/or the like.

In some embodiments of the disclosure, one or more SSD controllers may be connected to an FPGA through one or more RPs for providing persistent storage.

In some embodiments of the disclosure, one or more NICs may be connected to an FPGA through one or more RPs for providing content requests and/or transmission service.

In some embodiments of the disclosure, one or more PCIe-PCIe bridges may be used to connect to one or more SSD controllers, for example, in a pass-through manner.

In some embodiments of the disclosure, one or more bridges may be used to connect to one or more NICs in a pass-through manner. The bridges may be, for example, PCIe-PCIe, PCIe-CXL, PCIe-undisclosed, CXL-CXL, CXL-PCIe, or CXL-undisclosed, among other possibilities.

In some embodiments of the disclosure, instead of a pass-through bridge, an FPGA may be used as a higher level protocol terminate-regenerate bridge architecture, for example, to connect to an SSD controller and/or a NIC to a host.

In some embodiments of the disclosure, content may be provided (e.g., directly provided) from an SSD to a NIC under host software control which may also be referred to as orchestration.

Some embodiments of the disclosure may implement Peer-to-Peer (P2P) content data transfers using, for example, using an NVMe protocol, a file read protocol, and/or the like.

In some embodiments of the disclosure, a P2P Buffer may be exposed through a BAR and/or a host programmed physical address range.

In some embodiments of the disclosure, a P2P buffer may be implemented with on-chip memory, off-chip SRAM and/or DRAM, and/or the like.

In some embodiments of the disclosure, a P2P buffer may be partitioned and/or shared among multiple bridges.

In some embodiments of the disclosure, a P2P buffer may be used as a replay and/or retransmission buffer, for example, until one or more packets are transferred successfully.

In some embodiments of the disclosure, a specified amount of content may be streamed from an SSD to a NIC through a P2P buffer, for example, by accounting for any back-pressures, retransmissions, P2P buffer sizes, and/or the like.

In some embodiments of the disclosure, a host may specify content specifics such as length, LBA ranges, and/or KV keys, and let the device transfer some or all of the content *(e.g.,* the whole content) without further intervention by the host.

In some embodiments of the disclosure, a host may offload some or all of the content transmission process (*e.g*., completely) to the device.

For purposes of illustration, some embodiments of the disclosure may be described in the context of one or more storage devices implemented as solid state drives (SSDs) with flash memory storage media. The principles of this disclosure, however, may be implemented with any type of storage device using any type of storage media including any other type of solid state media, magnetic media, optical media, and/or the like. For example, in some embodiments of the disclosure, a storage device may be implemented as a hard disk drive (HDD), an SSD based on not-AND (NAND) flash memory, persistent memory such as cross-gridded nonvolatile memory, memory with bulk resistance change, phase change memory (PCM) and/or the like, and/or any combination thereof.

Any of the storage devices disclosed herein may be implemented in any form factor such as 3.5 inch, 2.5 inch, 1.8 inch, M.2, Enterprise and Data Center SSD Form Factor (EDSFF), NF1, and/or the like, using any connector configuration such as Serial ATA (SATA), Small Computer System Interface (SCSI), Serial Attached SCSI (SAS), U.2, and/or the like.

Any of the storage devices disclosed herein may be implemented entirely or partially with, and/or used in connection with, a server chassis, server rack, dataroom, datacenter, edge datacenter, mobile edge datacenter, and/or any combinations thereof.

Any of the storage devices disclosed herein may communicate through any interfaces and/or protocols including Peripheral Component Interconnect Express (PCIe), Nonvolatile Memory Express (NVMe), NVMe-over-fabric (NVMe-oF), Ethernet, Transmission Control Protocol/Internet Protocol (TCP/IP), User Datagram Protocol (UDP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, Hypertext Transfer Protocol (HTTP), and/or the like, or any combination thereof.

In some embodiments of the disclosure, an SSD controller may be implemented with NVMe, SAS, SATA, HDD, and/or the like.

In some embodiments of the disclosure, a NIC protocol may be implemented with Ethernet, TCP, IP, UDP, RDMA, RoCE, iWARP, HTTP, and/or the like.

Any of the functionality disclosed herein may be implemented with hardware, software, or a combination thereof including combinational logic, sequential logic, one or more timers, counters, registers, and/or state machines, one or more complex programmable logic devices (CPLDs), field programmable gate arrays (FPGAs), application specific integrated circuits (ASICs), central processing units (CPUs) such as complex instruction set computer (CISC) processors such as x86 processors and/or reduced instruction set computer (RISC) processors such as ARM processors, graphics processing units (GPUs), neural processing units (NPUs), tensor processing units (TPUs) and/or the like, executing instructions stored in any type of memory, or any combination thereof. In some embodiments, one or more components may be implemented as a system-on-chip (SOC).

In the embodiments described herein, the operations are example operations, and may involve various additional operations not explicitly illustrated. In some embodiments, some of the illustrated operations may be omitted. In some embodiments, one or more of the operations may be performed by components other than those illustrated herein. Additionally, in some embodiments, the temporal order of the operations may be varied. Moreover, the figures are not necessarily drawn to scale.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, *e.g*., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail the scope of the invention being defined in the appended claims.

## Claims

1. A device (120), comprising:
a storage device (210, 305), the storage device including storage for data and a controller (515, 530) configured to manage access to the storage;
a network interface device (310) configured to send the data across a network (130);
a host interface (325), the host interface (325) configured to receive a request for the storage device (210, 305) or the network interface device (310); and
a buffer (340) connected to the storage device (210, 305) and the network interface device (310), wherein the network interface device (310) is configured to read the data from the buffer (340) and **characterised in that**: the storage device (210, 305) is configured to prefetch the data in the buffer (340) until the buffer (340) reaches a second threshold (610) representing a trigger to stop or pause data prefetch and to restart prefetching the data in the buffer (340) based at least in part on the buffer (340) reaching a first threshold (605) that is lower than the second threshold (610).

2. The device (120) according to claim 1, further comprising a circuit (345) to process the data in the buffer (340).

3. The device (120) according to claim 2, wherein the circuit (345) is configured to transcode the data in the buffer (340).

4. The device (120) according to any one of the claims 1 to 3, wherein the host interface (325) includes an endpoint exposing a first function to issue a first request to the storage device (210, 305) and a second function to issue a second request to the network interface device (310).

5. The device (120) according to any one of claims 1 to 4, further comprising a root port (1005-1, 1005-2).

6. A method, comprising:
receiving a request at a device (120) including a buffer (340) connected to a storage device (210, 305) of the device (120) and a network interface device (310) of the device (120);
accessing data from the storage device (210, 305) of the device (120) based at least in part on the request; and
transmitting the data using the network interface device (310) of the device (120),
wherein transmitting the data includes reading the data from the buffer (340) by the network interface device (310) of the device (120) and **characterised in that**: accessing the data includes prefetching the data into the buffer (340) by the storage device (210, 305) until the buffer (340) reaches a second threshold (610) representing a trigger to stop or pause data prefetch and restarting prefetching the data into the buffer (340) based at least in part on the buffer reaching a first threshold (605) that is lower than the second threshold (610).

7. The method according to claim 6, further comprising processing the data in the buffer (340) using a circuit (345) of the device (120).

8. The method according to claim 7, wherein processing the data in the buffer (340) using the circuit (345) of the device (120) includes transcoding the data in the buffer (340) using the circuit (345) of the device (120).

9. The method according to any one of claims 6 to 8, wherein receiving the request at the device (120) includes sending the request to the storage device (210, 305) of the device (120) using a root port (1005-1, 1005-2) of the device (120).

10. The method according to any one of claims 6 to 8, wherein receiving the request at the device (120) includes sending the request to the network interface device (310) of the device (120) using a root port (1005-1, 1005-2) of the device (120).

## Patentansprüche

1. Eine Vorrichtung (120), umfassend:
eine Speichervorrichtung (210, 305), wobei die Speichervorrichtung einen Speicher für Daten und einen Controller (515, 530) umfasst, der derart konfiguriert ist, dass er den Zugriff auf den Speicher verwaltet;
eine Netzwerkschnittstellenvorrichtung (310), die derart konfiguriert ist, dass sie die Daten über ein Netzwerk (130) sendet;
eine Hostschnittstelle (325), wobei die Hostschnittstelle (325) derart konfiguriert ist, dass sie eine Anforderung für die Speichervorrichtung (210, 305) oder die Netzwerkschnittstellenvorrichtung (310) empfängt; und
einen Puffer (340), der mit der Speichervorrichtung (210, 305) und der Netzwerkschnittstellenvorrichtung (310) verbunden ist, wobei die Netzwerkschnittstellenvorrichtung (310) derart konfiguriert ist, dass sie die Daten aus dem Puffer (340) liest, und **dadurch gekennzeichnet, dass**: die Speichervorrichtung (210, 305) derart konfiguriert ist, dass sie die Daten im Puffer (340) vorab abruft, bis der Puffer (340) einen zweiten Schwellenwert (610) erreicht, der einen Auslöser darstellt, um das Vorabrufen von Daten zu stoppen oder zu unterbrechen und das Vorabrufen der Daten im Puffer (340) zumindest teilweise auf der Grundlage zu starten, dass der Puffer (340) einen ersten Schwellenwert (605) erreicht, der niedriger ist als der zweite Schwellenwert (610).

2. Die Vorrichtung (120) nach Anspruch 1, ferner umfassend eine Schaltung (345) zum Verarbeiten der Daten im Puffer (340).

3. Die Vorrichtung (120) nach Anspruch 2, wobei die Schaltung (345) derart konfiguriert ist, dass sie die Daten im Puffer (340) transkodiert.

4. Die Vorrichtung (120) nach einem der Ansprüche 1 bis 3, wobei die Hostschnittstelle (325) einen Endpunkt umfasst, der eine erste Funktion zum Ausgeben einer ersten Anforderung an die Speichervorrichtung (210, 305) und eine zweite Funktion zum Ausgeben einer zweiten Anforderung an die Netzwerkschnittstellenvorrichtung (310) bereitstellt.

5. Die Vorrichtung (120) nach einem der Ansprüche 1 bis 4, ferner umfassend einen Root-Port (1005-1, 1005-2).

6. Ein Verfahren, umfassend:
Empfangen einer Anfrage an einer Vorrichtung (120), welche einen Puffer (340) umfasst, der mit einer Speichervorrichtung (210, 305) der Vorrichtung (120) und einer Netzwerkschnittstellenvorrichtung (310) der Vorrichtung (120) verbunden ist;
Zugreifen auf Daten aus der Speichervorrichtung (210, 305) der Vorrichtung (120) zumindest teilweise auf der Grundlage der Anforderung; und
Übertragen der Daten unter Verwendung der Netzwerkschnittstellenvorrichtung (310) der Vorrichtung (120),
wobei das Übertragen der Daten das Lesen der Daten aus dem Puffer (340) durch die Netzwerkschnittstellenvorrichtung (310) der Vorrichtung (120) umfasst, und **dadurch gekennzeichnet ist, dass**: das Zugreifen auf die Daten das Vorabrufen der Daten in den Puffer (340) durch die Speichervorrichtung (210, 305) in den Puffer (340) vorab geladen werden, bis der Puffer (340) einen zweiten Schwellenwert (610) erreicht, der einen Auslöser zum Stoppen oder Anhalten des Vorabladens von Daten darstellt, und das Vorabladen der Daten in den Puffer (340) zumindest teilweise auf der Grundlage, dass der Puffer einen ersten Schwellenwert (605) erreicht, der niedriger ist als der zweite Schwellenwert (610), neu gestartet wird.

7. Das Verfahren nach Anspruch 6, ferner umfassend das Verarbeiten der Daten im Puffer (340) unter Verwendung einer Schaltung (345) der Vorrichtung (120).

8. Das Verfahren nach Anspruch 7, wobei die Verarbeitung der Daten im Puffer (340) unter Verwendung der Schaltung (345) der Vorrichtung (120) das Transcodieren der Daten im Puffer (340) unter Verwendung der Schaltung (345) der Vorrichtung (120) umfasst.

9. Das Verfahren nach einem der Ansprüche 6 bis 8, wobei das Empfangen der Anforderung an der Vorrichtung (120) das Senden der Anforderung an die Speichervorrichtung (210, 305) der Vorrichtung (120) unter Verwendung eines Root-Ports (1005-1, 1005-2) der Vorrichtung (120) umfasst.

10. Das Verfahren nach einem der Ansprüche 6 bis 8, wobei das Empfangen der Anforderung an der Vorrichtung (120) das Senden der Anforderung an die Netzwerkschnittstellenvorrichtung (310) der Vorrichtung (120) unter Verwendung eines Root-Ports (1005-1, 1005-2) der Vorrichtung (120) umfasst.

## Revendications

1. Un dispositif (120) comprenant :
un dispositif de stockage (210, 305), le dispositif de stockage comprenant un espace de stockage pour les données et un contrôleur (515, 530) configuré pour gérer l'accès au stockage ;
un dispositif d'interface réseau (310) configuré pour envoyer les données sur un réseau (130) ;
une interface hôte (325), l'interface hôte (325) étant configurée pour recevoir une demande destinée au dispositif de stockage (210, 305) ou au dispositif d'interface réseau (310) ; et
un tampon (340) connecté au dispositif de stockage (210, 305) et au dispositif d'interface réseau (310), dans lequel le dispositif d'interface réseau (310) est configuré pour lire les données à partir du tampon (340) et **caractérisé en ce que** : le dispositif de stockage (210, 305) est configuré pour précharger les données dans le tampon (340) jusqu'à ce que le tampon (340) atteigne un deuxième seuil (610) représentant un déclencheur pour arrêter ou suspendre la prélecture des données et pour redémarrer la prélecture des données dans le tampon (340) sur la base, au moins en partie, du fait que le tampon (340) atteint un premier seuil (605) qui est inférieur au deuxième seuil (610).

2. Le dispositif (120) selon la revendication 1, comprenant en outre un circuit (345) pour traiter les données dans le tampon (340).

3. Le dispositif (120) selon la revendication 2, dans lequel le circuit (345) est configuré pour transcoder les données dans le tampon (340).

4. Le dispositif (120) selon l'une des revendications 1 à 3, dans lequel l'interface hôte (325) comprend un point d'extrémité exposant une première fonction pour émettre une première requête vers le dispositif de stockage (210, 305) et une deuxième fonction pour émettre une deuxième requête vers le dispositif d'interface réseau (310).

5. Le dispositif (120) selon l'une des revendications 1 à 4, comprenant en outre un port racine (1005-1, 1005-2).

6. Un procédé comprenant :
la réception d'une requête au niveau d'un dispositif (120) comprenant un tampon (340) connecté à un dispositif de stockage (210, 305) du dispositif (120) et un dispositif d'interface réseau (310) du dispositif (120) ;
accéder à des données provenant du dispositif de stockage (210, 305) du dispositif (120) sur la base, au moins en partie, de la requête ; et
transmettre les données à l'aide du dispositif d'interface réseau (310) du dispositif (120),
dans lequel la transmission des données comprend la lecture des données à partir du tampon (340) par le dispositif d'interface réseau (310) du dispositif (120) et **caractérisé en ce que** : l'accès aux données comprend la prélecture des données dans le tampon (340) par le dispositif de stockage (210, 305) jusqu'à ce que le tampon (340) atteigne un deuxième seuil (610) représentant un déclencheur pour arrêter ou mettre en pause la prélecture des données et redémarrer la prélecture des données dans le tampon (340) sur la base, au moins en partie, du tampon atteignant un premier seuil (605) qui est inférieur au deuxième seuil (610).

7. Le procédé selon la revendication 6, comprenant en outre le traitement des données dans le tampon (340) à l'aide d'un circuit (345) du dispositif (120).

8. Le procédé selon la revendication 7, dans lequel le traitement des données dans le tampon (340) à l'aide du circuit (345) du dispositif (120) comprend le transcodage des données dans le tampon (340) à l'aide du circuit (345) du dispositif (120).

9. Le procédé selon l'une des revendications 6 à 8, dans lequel la réception de la demande au niveau du dispositif (120) comprend l'envoi de la demande au dispositif de stockage (210, 305) du dispositif (120) à l'aide d'un port racine (1005-1, 1005-2) du dispositif (120).

10. Le procédé selon l'une des revendications 6 à 8, dans lequel la réception de la requête au niveau du dispositif (120) comprend l'envoi de la requête au dispositif d'interface réseau (310) du dispositif (120) à l'aide d'un port racine (1005-1, 1005-2) du dispositif (120).
